# FASCICULE DE BREVET EUROPEEN

(11) **EP 3 554 926 B1**
(45) Date de publication et mention de la délivrance du brevet: **10.02.2021**
(21) Numéro de dépôt: 17816979.3
(22) Date de dépôt: 04.12.2017
(51) Int. Cl.: B62D 35/00, B62D 37/02

(54) **BECQUET POUR VÉHICULE AUTOMOBILE COMPRENANT DES ÉCOPES MOBILES**
SPOILER FÜR KRAFTFAHRZEUG MIT BEWEGLICHEN KANÄLEN
SPOILER FOR MOTOR VEHICLE COMPRISING MOBILE SCOOPS

(30) Priorité: 14.12.2016 FR 1662425
(43) Date de publication de la demande: 23.10.2019
(73) Titulaire: Compagnie Plastic Omnium, 69007 Lyon (FR)
(72) Inventeur: EULALIE, Yoann, 69006 Lyon (FR); LETERRIER, Franck, 69800 Saint Priest (FR); GILOTTE, Philippe, 01470 Benonces (FR)
(74) Mandataire: LLR
(86) Numéro de dépôt international: PCT/FR2017/053371
(87) Numéro de publication internationale: WO 2018/109310

(56) Documents cités:
- DE-A1- 10 028 696
- JP-A- H08 198 151
- JP-A- H08 276 871
- US-A- 4 881 772
- US-A1- 2015 274 222

## Description

L'invention concerne le domaine de l'automobile, plus particulièrement celui des becquets de véhicule automobile du type comportant un dispositif de nettoyage de la lunette arrière.

On appelle becquet (ou spoiler en anglais) une pièce de carrosserie formant une extension du toit positionnée sur l'arrière d'un véhicule, et destinée à améliorer les performances aérodynamiques (à l'arrière) du véhicule sur laquelle cette pièce est placée. Les becquets sont également utilisés pour des aspects esthétiques (style) du véhicule. Ils sont situés et fixés en partie haute et arrière du véhicule entre le toit et le bord supérieur de la lunette, sur le toit ou sur le hayon.

Certains becquets constituent également des dispositifs de nettoyage de la lunette arrière.

Classiquement, la pluie et les salissures sont retirées de la lunette arrière à l'aide d'essuie-glaces et de lave-glace arrière. Malheureusement, les essuie-glaces et lave-glace arrière ont tendance à être coûteux, encombrants et sont sujets à des dommages. Ils sont de plus moins utilisés que ceux situés à l'avant pour le pare-brise et le poids de l'ensemble du système, incluant un moteur pour faire fonctionner l'essuie-glace, peut-être pénalisant vis-à-vis d'un objectif d'allégement.

C'est pourquoi, certains becquets sont conçus pour diriger une partie de l'air circulant le long du panneau de toit directement au-dessus de la lunette arrière. En conséquence, les salissures (pluie, boue, poussière...) sont repoussées de la lunette arrière.

On connait également, par exemple du document EP2711254A2, un becquet comportant un élément mobile de type trappe. L'élément mobile est, en position active, en saillie par rapport à la face supérieure ou inférieure du becquet, et le taux de saillie (hauteur de dépassement) augmente lorsque la vitesse du véhicule diminue afin de nettoyer la vitre arrière. A l'inverse, le taux de saillie diminue lorsque la vitesse augmente pour limiter les inconvénients aérodynamiques. Cela est également le cas dans le document JP H08 276871 A dans lequel un ou plusieurs éléments mobiles se déploient afin de permettre un passage d'air vers la lunette arrière ou se rétractent pour impacter le moyen possible des performances aérodynamiques du véhicule.

Ce type de becquet offre une solution désavantageuse en termes de performances aérodynamiques.

Ainsi, les systèmes connus pour nettoyer la lunette arrière, comportent un organe en saillie de la surface de prolongement du toit, permettant de capter l'air circulant le long du toit et de le rediriger de haut en bas de la partie supérieure du spoiler à la partie inférieure du spoiler. Cependant, ces organes ont un effet négatif sur les performances aérodynamiques du véhicule, en particulier à grande vitesse.

On connaît également des systèmes s'affranchissant d'éléments mobiles. Ces dispositifs comportent un conduit ouvert en permanence, traversant l'épaisseur en Z du becquet et débouchant au-dessus de la lunette arrière, ce conduit étant adapté à laisser passer passivement une partie de l'écoulement d'air provenant du toit vers la lunette. Le conduit comporte une entrée et une sortie dans l'épaisseur (en Z) du becquet. Ainsi, l'air provenant du toit entre passivement dans l'entrée du conduit, puis s'écoule dans le conduit, et enfin, sort du conduit au niveau de sa sortie, au niveau de la portion supérieure de la face extérieure de la lunette arrière.

Cependant un tel conduit présentant une ouverture au niveau du toit peut avoir un effet négatif sur les performances aérodynamiques du véhicule, notamment à grande vitesse.

Un but de l'invention est de supprimer ou tout au moins de limiter notablement tout ou partie des inconvénients précités.

Dans ce but, l'invention a pour objet un becquet pour véhicule automobile destiné à être disposé dans une région d'un bord arrière de toit au-dessus d'une lunette arrière, comprenant :
- plusieurs ouvertures situées sur une face supérieure du becquet, et
- plusieurs conduits aptes à relier les ouvertures à une face inférieure du becquet,
le becquet comprend plusieurs écopes montées dans les ouvertures et mobiles par rapport au becquet de manière à pouvoir, en position repliée, obturer les ouvertures et à pouvoir canaliser, en position déployée, permettre l'écoulement d'air le long de la lunette arrière, les écopes comprenant des moyens aptes à permettre la génération de structures tourbillonnaires.

Ainsi, on obtient un becquet permettant non seulement de nettoyer la lunette arrière grâce au conduit permettant d'acheminer de l'air vers la partie supérieure de la lunette, air se propageant par la suite le long de la lunette arrière lorsque les écopes sont en position déployée, mais ces écopes comprennent également des moyens permettant, en position déployée, de créer des vortex, c'est-à-dire des structures tourbillonnaires permettant de ne pas diminuer, voire d'augmenter, les performances aérodynamiques.

De manière optionnelle, le becquet selon l'invention peut comprendre une ou plusieurs des caractéristiques suivantes prises séparément ou en combinaison :
- les écopes comprennent deux flancs et une paroi supérieure reliant les deux flancs, la paroi supérieure formant un angle avec le toit en position déployée apte à permettre la création de vortex ;
- un écartement entre les flancs à une extrémité des écopes est supérieur à un écartement entre les flancs à une autre extrémité des écopes ;
- la paroi supérieure s'étend de part et d'autre des flancs dans une direction parallèle à celle de la paroi supérieure;
- le becquet comprend en outre une lame aérodynamique mobile ;
- le becquet comprend un dispositif d'actionnement des écopes et de la lame aérodynamique comprenant un système à crémaillère comprenant une roue dentée et des crémaillères parallèles entre elles, chacune des deux crémaillères collaborant respectivement avec une des écopes et la lame aérodynamique ;
- la crémaillère collaborant avec la lame aérodynamique comprend une extrémité incurvée ;
- la crémaillère collaborant avec une écope comprend une butée située à son extrémité collaborant avec l'écope ;
- les moyens d'actionnement comprennent un moyen de rappel de l'écope, notamment un ressort classique ou à mémoire de forme ;
   1. le becquet comprend plusieurs biellettes (548, 550, 552) aptes à permettre le déploiement et la rétractation de la lame aérodynamique (22) ;
- les écopes sont montées de telle sorte que, en position repliée, une face supérieure des écopes soit affleurante avec la face supérieure du becquet ;
- les écopes sont recouvertes en position repliée par un cache affleurant à la face supérieure du becquet ou par la lame aérodynamique, et ;
- le cache ou la lame aérodynamique est apte à se déployer avant ou en même temps que les écopes.

Nous allons maintenant présenter des modes de réalisation de l'invention à l'appui des figures annexées, qui sont fournies à titre d'exemples et ne présentent aucun caractère limitatif, dans lesquelles :
- la figure 1 est une vue en perspective d'une portion arrière de véhicule comprenant un becquet selon un premier mode de réalisation de l'invention ;
- les figures 2 et 3 sont des vues en perspective d'une portion arrière de véhicule automobile comprenant un becquet selon l'invention;
- la figure 4 est un vue partielle en coupe d'une portion arrière de véhicule automobile comprenant le becquet des figures 1 à 3 ;
- les figures 5 et 6 sont respectivement des vues en perspective et en coupe d'une écope selon un second mode de réalisation ;
- les figures 7 et 8 sont respectivement des vues en perspective et en coupe d'une écope selon un troisième mode de réalisation ;
- la figure 9 est une représentation schématique d'un becquet comprenant une écope et une lame aérodynamique mobile en position repliée puis en position déployée selon un quatrième mode de réalisation de l'invention ;
- les figures 10 et 11 sont des représentations schématiques représentant des variantes de système de déploiement et de rétractation de l'écope et de la lame aérodynamique en position repliée puis en position déployée ;
- les figures 12 et 13 sont des vues en coupe d'un becquet selon un cinquième mode de réalisation de l'invention ;
- les figures 14 et 15 sont des vues en coupe représentant une variante du becquet des figures 12 et 13 ;
- les figures 16 et 17 sont des vues en coupe d'un becquet selon un sixième mode de réalisation de l'invention ;
- les figures 18 à 21 sont des vues en perspective du becquet des figures 16 et 17 ; et
- les figures 22 à 24 sont des variantes du becquet des figures 16 et 17.

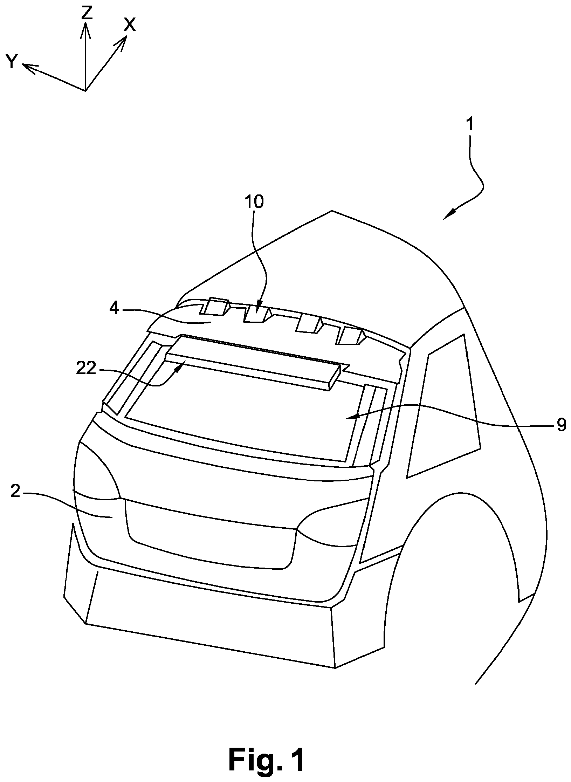

On se réfère maintenant aux figures 1 à 4 qui représentent un véhicule 1 comprenant une portion arrière 2 comprenant elle-même un becquet 4 et un hayon 6. Le becquet 4 pour véhicule automobile selon l'invention est destiné à être disposé dans une région d'un bord arrière de toit, au-dessus d'une lunette arrière 9. Le becquet peut ainsi être fixé sur le toit, ou monté sur le hayon 6.

Le becquet 4 comprend un conduit 12 reliant la face supérieure du becquet 4 à la portion supérieure de la face extérieure de la lunette arrière 9 afin qu'une partie de l'air du toit soit dévié à l'intérieur du conduit 12 et puisse balayer la lunette arrière 9 en sortie du conduit 12 au niveau d'une région spécifique. De façon préférentielle, cette région correspond sensiblement à la région de vision arrière du véhicule qui doit donc être celle à nettoyer. On appelle vision arrière le champ de vision du conducteur lorsqu'il regarde vers l'arrière du véhicule à travers la lunette arrière 9.

Selon l'exemple illustré, le becquet 4 comprend également sur sa face supérieure quatre ouvertures 8 au niveau desquelles débouche le conduit 12. Chaque ouverture 8 est associée à une écope 10. On entend par écope un organe en creux composé de deux flancs latéraux et d'une paroi supérieure, présentant une ouverture faisant face à un écoulement d'air venant du toit et apte à diriger l'air vers l'entrée du conduit 12.

Dans l'exemple décrit, les ouvertures 8 réalisées dans le becquet 4 sont sensiblement alignées les unes par rapport aux autres dans une direction longitudinale du becquet 4. Cette direction correspond à une direction parallèle à un axe transversale Y du véhicule et sera mentionnée ultérieurement comme tel. Les ouvertures 8 réalisées dans le becquet peuvent cependant être disposées le long d'une courbe suivant le rayon de courbure autour de l'axe transversal du becquet et/ou de l'axe Z du véhicule.

Les termes d'orientation, tels que « axe longitudinal X », « axe transversal Y », « axe vertical Z », « avant », « arrière », « au-dessus », « supérieure », « en dessous », « inférieure », etc. s'entendent par référence à l'orientation usuelle des véhicules automobiles selon le repère représenté sur la figure 1.

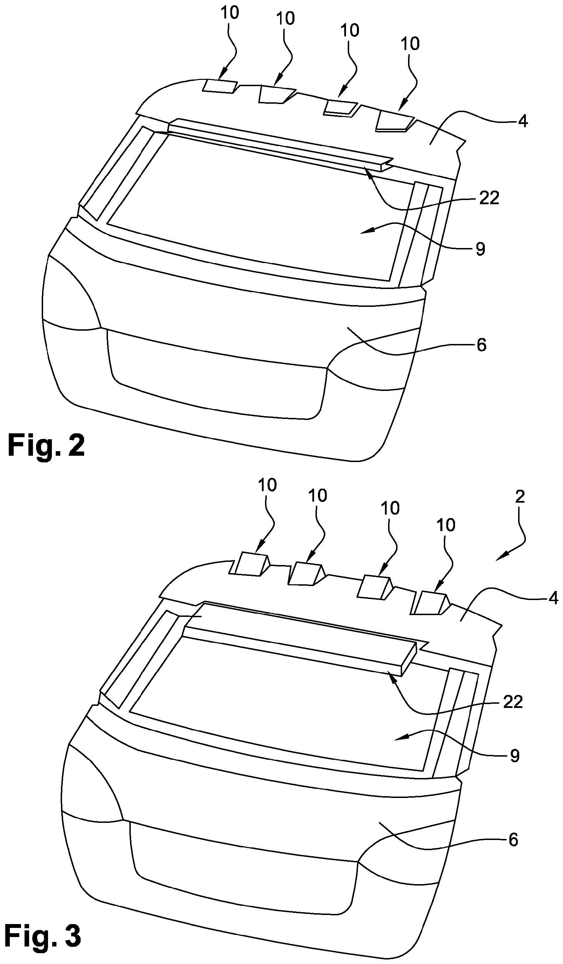

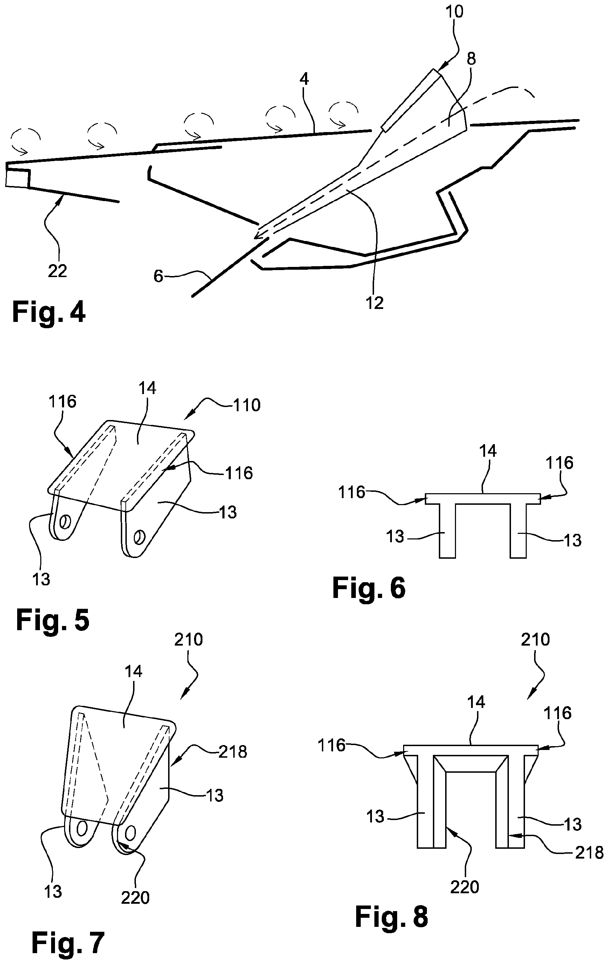

Les écopes 10 sont mobiles. Elles sont représentées en position repliée sur la figure 2 et en position déployée sur les figures 3 et 4. Le déploiement des écopes peut se faire par exemple en rotation ou encore en translation.

Une écope 10 comporte trois parois : deux flancs latéraux 13 surmontés d'une paroi supérieure 14.

Les écopes sont configurées en forme et en position de façon à permettre la création de vortex.

On entend par vortex la formation de structure tourbillonnaire spécifique. Le brevet EP 1 740 442 décrit l'utilisation de dispositifs de génération de vortex afin d'améliorer l'écoulement de l'air dans une zone située en aval du véhicule pendant le roulage, zone comprenant une couche de cisaillement et un tourbillon principal de retour.

Les moyens présents sur les écopes du becquet permettant de créer des vortex disposent des caractéristiques suivantes prises seules ou en combinaison :
- le becquet 4 comporte une pluralité d'écope présentant une ouverture face à l'écoulement d'air du toit,
- le rapport de forme largeur/hauteur de l'écope est suffisant pour permettre la génération de structures tourbillonnaires. Il s'agit idéalement d'un rapport de l'ordre de 1.
- l'écope peut comprendre des épaulements latéraux 116 situés au niveau de l'intersection entre chaque flanc 13 et la paroi supérieur 14 et s'étendant dans une direction longitudinale du becquet en débordant de la portée des flancs ;
- les deux flancs latéraux 13 constituent un canal se rétrécissant dans le sens de l'écoulement de l'air. La paroi supérieure peut alors avoir une forme trapézoïdale, la partie la plus large étant orientée vers l'avant du véhicule ;

En position déployée, la paroi supérieure 14 forme un angle avec la surface supérieure du becquet 4 qui, en combinaison avec la hauteur de dépassement de l'écope en saillie au-dessus du becquet, permet la création de vortex. L'angle formé peut être compris entre 10 et 80°, par exemple aux alentours de 45° comme cela est représenté sur la figure 4. La hauteur de dépassement de l'écope peut être comprise entre 20 et 80 mm, de préférence entre 20 et 60 mm. Dans le mode de réalisation représenté aux figures 2 et 3, les deux flancs 13 sont parallèles et situés dans des plans normaux à Y. La paroi supérieure 14 relie les deux flancs 13 et est sensiblement perpendiculaire à ces derniers. Quand l'écope est en position rétractée la paroi supérieure 14 est alignée avec le becquet 4 et sa face supérieure est affleurante à la face supérieure du becquet 4.

Dans ce qui va suivre, on décrira d'autres modes de réalisation de l'invention en se référant aux figures 5 à 24. Sur ces figures, les éléments analogues à ceux des figures précédentes sont désignés par des références numériques identiques. Les éléments modifiés ou nouveaux seront quant à eux numérotés par pas de cent, chaque centaine correspondant à un mode de réalisation.

Dans un second mode de réalisation représenté aux figures 5 et 6, une écope 110 comprend les deux flancs 13 et la paroi supérieure 14. Les flancs 13 et la paroi supérieure 14 s'étendent dans des directions identiques à celles du premier mode de réalisation. La forme générale de l'écope 110 est similaire au premier mode de réalisation. Cependant, la paroi supérieure 14 comprend deux épaulements latéraux 116 situées aux extrémités de la paroi supérieure 14 de part et d'autre des flancs 13 et s'étendant localement dans la même direction que la paroi supérieure 14. Cette disposition permet la création de vortex lors du roulage, pendant lequel le flux d'air va percuter localement les épaulements latéraux 116. La forme et la taille des épaulements latéraux 116 peuvent varier d'une écope à l'autre.

Selon un troisième mode de réalisation de l'invention représenté aux figures 7 et 8, une écope 210 comprend les flancs 13 et la paroi supérieure 14. La paroi supérieure 14 s'étend dans une direction similaire aux deux premiers modes de réalisation. Quant aux flancs 13, l'écartement entre eux à une extrémité 218 de l'écope est supérieur à un écartement entre les flancs à une autre extrémité de l'écope 220. En d'autres termes, les deux flancs 13 ne sont pas parallèles et l'écope 10 se rétrécit dans le sens de l'écoulement de l'air. En l'espèce, l'extrémité 218 correspond à l'extrémité par laquelle l'air s'engouffre dans l'écope et l'extrémité 220 correspond à l'extrémité de l'écope 210 la plus proche du conduit 12 en position ouverte. Le canal formé par les flancs 13 et la paroi supérieure 14 tend donc à se réduire dans le sens d'écoulement de l'air. Cette forme de l'écope permet de canaliser le flux d'air afin que ce dernier vienne balayer la lunette arrière. La différence d'écartement entre les extrémités 218 et 220 peut varier afin d'ajuster l'effet du rétrécissement du canal sur la création de vortex. La forme de la paroi supérieure 14 peut être adaptée à la variation d'écartement entre les deux flancs. Une écope selon le troisième mode de réalisation de l'invention peut ou non avoir des épaulements latéraux 116 comme l'écope selon le second mode de réalisation.

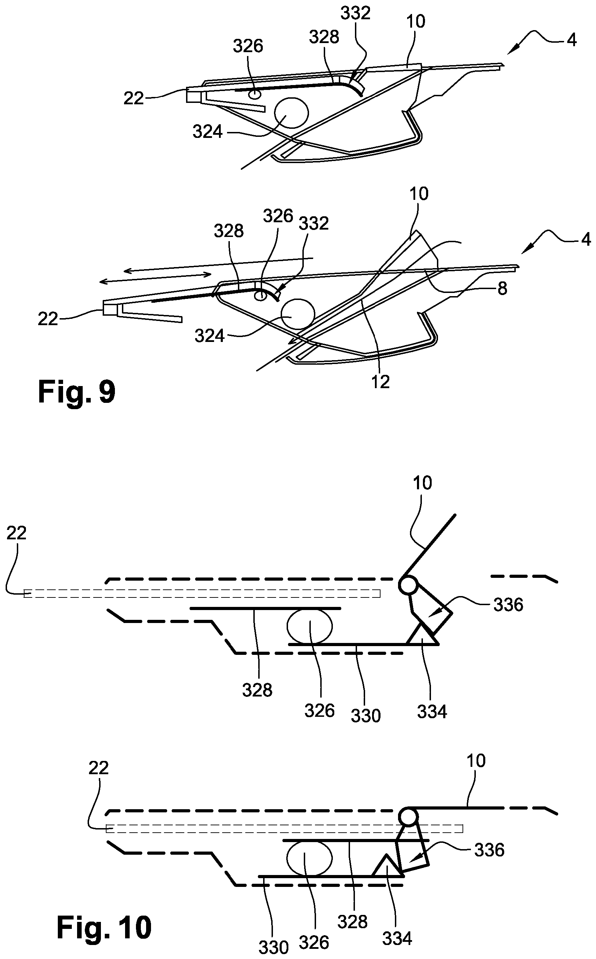

Selon un quatrième mode de réalisation de l'invention représenté par différentes variantes aux figures 9 à 11, le becquet 4 peut comprendre également une lame aérodynamique mobile 22 représentée en position repliée sur la figure 2 et en position déployée sur les figures 3 et 5. La lame aérodynamique 22 déployée permet d'améliorer encore plus l'effet aérodynamique en décalant plus vers l'arrière du véhicule les points de décollement de l'air par rapport au véhicule, c'est-à-dire les points au niveau desquels l'air ne suit plus la carrosserie. Cette lame aérodynamique 22 comprend un joint (non représenté) s'étendant sur sa face supérieure et sa tranche intérieure. Le becquet 4 comprend des moyens de guidage central et latéral (non représentés) de la lame aérodynamique 22 par rapport à la partie fixe du becquet 4.

Afin de permettre le déploiement des écopes et de la lame aérodynamique, le becquet 4 comprend des moyens d'actionnement des écopes et de la lame aérodynamique situés dans le volume du becquet.

Ces moyens d'actionnement comprennent un système à crémaillère comprenant un moteur 324 apte à mettre en mouvement une roue dentée 326. Deux crémaillères 328 et 330 disposées de part et d'autre de la roue dentée 326 permettent de déplacer respectivement la lame aérodynamique 22 et les écopes 10 entre une position repliée et une position déployée. Plus précisément, la rotation de la roue dentée 326 a pour conséquence de provoquer un déplacement en translation et simultané des deux crémaillères 328 et 330, déplacement possible dans une même direction et dans deux sens opposés afin de permettre le déploiement et la rétractation de l'écope 10 et de la lame aérodynamique 22. Les deux crémaillères 328 et 330 sont ici disposées de part et d'autre de la roue dentée 326 mais pourront le cas échéant être déportées l'une par rapport à l'autre en Y.

Dans une variante représentée à la figure 9, la crémaillère 328 collaborant avec la lame aérodynamique 22 comprend une extrémité incurvée. Il s'agit de l'extrémité 332 en contact avec la roue dentée 326 lorsque la lame aérodynamique 22 est totalement déployée. Cette forme permet d'incliner la lame aérodynamique 22 lors de la fin de son déploiement. L'inclinaison se fait vers le bas sur la figure 10, il est envisageable d'avoir une inclinaison vers le haut. Une inclinaison vers le bas permet de réduire la trainée du véhicule alors qu'une orientation vers le haut permet une augmentation de la portance du véhicule et donc une augmentation de l'appui sur l'essieu arrière.

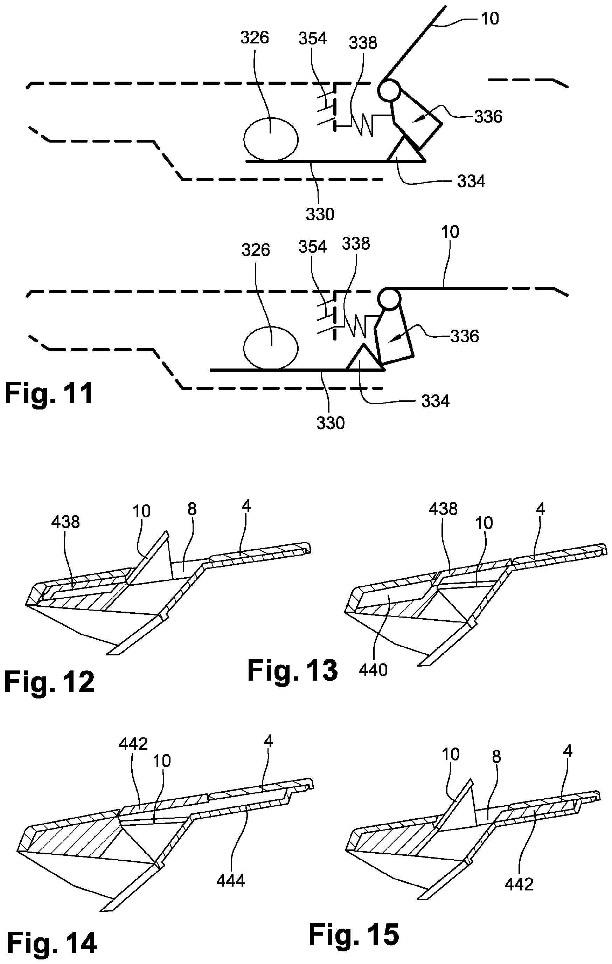

Dans une variante représentée aux figures 10 et 11, la seconde crémaillère 330 collaborant avec l'écope 10 comprend à son extrémité une butée 334 apte à venir en contact avec l'écope 10. Cette butée peut avoir une forme complémentaire de la partie intérieure 336 de l'écope 10. Cette complémentarité permet à la partie intérieure 336 d'être en appui sur la butée 334 lorsque l'écope 10 est en position déployée, comme représenté aux figures 10 et 11.

Dans une autre variante représentée à la figure 11, les moyens d'actionnement de l'écope 10 et de la lame aérodynamique 22 comprennent des moyens de rappel 338.

Ces moyens de rappel permettent de replier plus facilement l'écope 10. Ils peuvent être de toute nature compatible avec l'invention, il peut par exemple s'agir d'un ressort classique ou encore d'un ressort à mémoire de forme. Ces moyens sont reliés d'une part à l'écope 10 et d'autre part à une partie fixe 354 du mécanisme de déploiement/repli.

Dans ce quatrième mode de réalisation, dans les exemples représentés sur les figures 9, 10 et 11, l'écope 10 et la lame aérodynamique 22 sont déployées et rétractées en même temps. Il est également possible qu'elles soient déployées l'une après l'autre grâce à un mécanisme permettant de séparer les mouvements des différents organes.

Aussi, le quatrième mode de réalisation représente une écope 10 montée de telle sorte que, en position repliée, la face supérieure de cette dernière soit affleurante à la face supérieure du becquet 4. Il est envisageable que cela ne soit pas le cas, comme cela sera décrit ultérieurement.

Dans un cinquième mode de réalisation représenté aux figures 12 à 15, la face supérieure de l'écope 10 n'est pas, en position repliée, affleurante à la face supérieure du becquet 4 mais est située plus bas afin d'être recouverte lorsqu'elle est en position repliée.

Dans une première variante illustrée aux figures 12 et 13, l'écope 10 en position repliée est recouverte par un cache 438 dont la face supérieure est affleurante avec la face supérieure du becquet 4. Lorsque l'écope doit être déployée, le cache 438 est déplacé, par exemple par des glissières (non représentées) ou tout autre système d'escamotage adapté à l'invention, afin de venir se loger dans un espace 440 sous la face supérieure du becquet dans sa partie arrière, c'est-à-dire sa partie la plus éloignée du toit du véhicule. Cet escamotage permet le déploiement de l'écope 10.

Dans une variante représentée aux figures 14 et 15, l'écope 10 est également recouverte par un cache 442 recouvrant l'écope 10 de la même manière que le cache 438. Cependant lors du déploiement de l'écope 10, le cache 442 est escamoté, par l'intermédiaire d'un système équivalent à celui des figures 12 et 13, à l'intérieur d'un espace situé sous la face supérieure du becquet 4, plus précisément dans sa partie la plus proche du toit du véhicule.

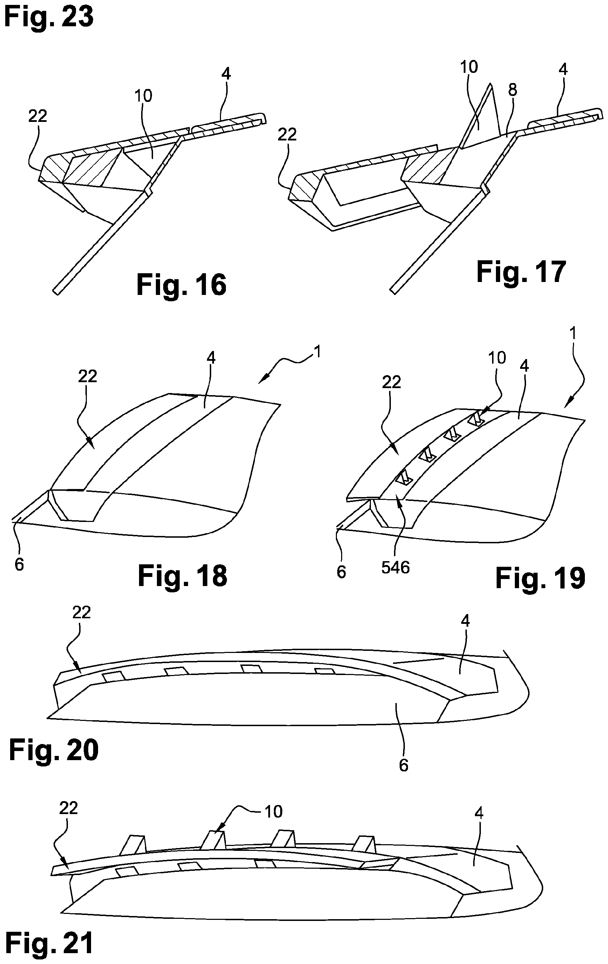

Dans un sixième mode de réalisation de l'invention représenté aux figures 16 à 24, la lame aérodynamique 22 sert aussi de cache de façon analogue à la pièce 442 du 5^{ème} mode de réalisation.

En position repliée, la lame aérodynamique 22 recouvre les écopes et sa face supérieure est affleurante à la face supérieure du reste du becquet 4, comme cela est représenté aux figures 18, 20 et 22. La face supérieure de lame aérodynamique 22 est en outre alignée avec la face supérieure de becquet 4. La lame est déployée avant les écopes 10 et en position déployée, la lame libère un espace 546 comprenant les ouvertures 8 et les écopes 10.

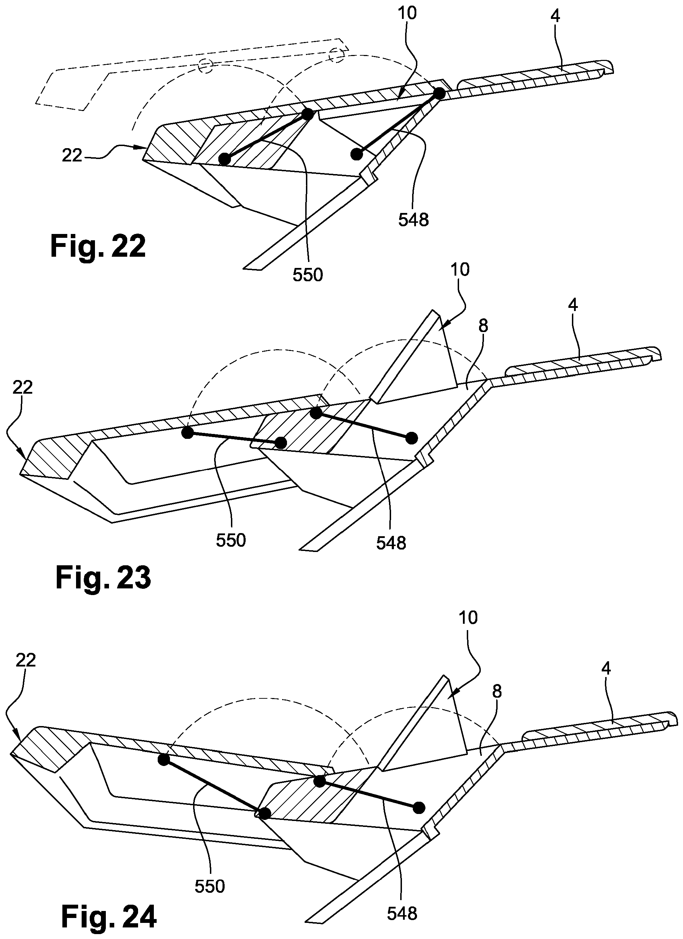

Les moyens d'actionnement de la lame aérodynamique 22 et des écopes 10 peuvent être similaires à ceux vus auparavant, c'est-à-dire utilisant un système à crémaillère mais désynchronisant suffisamment les mouvements pour que la lame soit assez décalée avant que les écopes ne commencent à se déployer. Il peut cependant s'agir d'un système de biellettes comme représenté aux figures 22 à 24.

Le becquet 4 comprend des biellettes 548 et 550 ou 548 et 552 apte à permettre le déploiement de la lame aérodynamique 22.

Comme représenté à la figure 24, il est possible de régler le système de biellettes de sorte que, en position déployée, la lame aérodynamique 22 ne soit pas alignée avec un prolongement imaginaire d'une ligne d'écoulement d'air du toit mais soit au contraire inclinée, par exemple vers le haut, afin de procurer un effet de portance aérodynamique. Là encore, il est envisageable que cette inclinaison se fasse vers le bas et non vers le haut.

Lors du déploiement et de la rétractation, la lame aérodynamique va occuper une position intermédiaire surélevée par rapport au reste du becquet 4 comme illustré en pointillés sur la figure 24.

Dans le quatrième mode de réalisation de l'invention, les écopes 10 et la lame aérodynamique 22 sont tout d'abord repliées, les écopes 10 ayant leurs faces supérieures affleurantes avec la face supérieure du becquet 4.

Lors de la mise en route des moyens d'actionnement, le moteur 324 actionne la roue dentée 326 qui va déplacer les crémaillères 328 et 330 en translation afin de déployer la lame aérodynamique et les écopes en même temps. Les écopes sont déployées grâce à l'action de la butée 334 et sont maintenues stablement en position déployée notamment grâce à la présence d'un élément d'une butée d'ouverture maximum des écopes (non représentée). La lame aérodynamique 22 peut quant à elle être inclinée grâce à l'extrémité incurvée 332 de la crémaillère 328.

Lors de la rétractation, la roue dentée 326 va tourner dans le sens inverse du déploiement afin de ramener les crémaillères 328 et 330 dans la position qu'elles occupaient avant le déploiement. Cette rétractation peut être optimisée par l'action des moyens de rappel 338.

Dans les cinquième et sixième modes de réalisation de l'invention, le cache 438/442 ou la lame aérodynamique 22 recouvre les écopes 10 en position repliée.

Les moyens d'actionnement vont d'abord déployer la lame aérodynamique 22 ou escamoter les caches 438 ou 442 afin de permettre un déploiement des écopes 10.

Lors de la rétractation, les écopes 10 sont repliées en premier. Les caches 438 et 442 ou la lame aérodynamique 22 étant déplacés ensuite afin de venir recouvrir les écopes 10. Il est envisageable que les écopes 10 soient repliées par la lame aérodynamique 22 lorsque cette dernière se replie. De la même manière, il est possible que les écopes 10 se déploient au moins partiellement lorsque la lame aérodynamique 22 se déploie, par exemple à l'aide d'un ou plusieurs ressorts par écope. Ce déploiement pourra être complété par l'air s'engouffrant dans les écopes pendant le roulage.

L'invention n'est pas limitée aux modes de réalisation présentés et d'autres modes de réalisation apparaîtront clairement à l'homme du métier.

Les écopes peuvent par exemple comporter une paroi inférieure pour avoir une structure tubulaire.

### Nomenclature

### 1 ^{er} mode de réalisation

1 : véhicule
2 : portion arrière de véhicule
4 : becquet
6 : hayon
8 : ouverture
9 : lunette arrière
10 : écope
12 : conduit
13 : flancs de l'écope
14 : paroi supérieure de l'écope
22 : lame aérodynamique

### 2^{ème} mode de réalisation

110 : écope
116 : épaulements latéraux

### 3^{ème} mode de réalisation

210 : écope
218 : 1^{ère} extrémité de l'écope
220 : seconde extrémité de l'écope

### 4^{ème} mode de réalisation

324 : moteur
326 : roue dentée
328 : 1^{ère} crémaillère
330 : 2^{ème} crémaillère
332 : extrémité incurvée de la 1^{ère} crémaillère
334 : butée
336 : partie intérieure de l'écope
338 : moyens de rappel
354 : partie fixe

### 5^{ème} mode de réalisation

438 : 1^{ère} variante de cache
440 : 1^{er} espace
442 : 2^{ème} variante de cache
444 : 2^{ème} espace

### 6^{ème} mode de réalisation

546 : espace comprenant les écopes
548 : 1^{ère} biellette
550 : 2^{ème} biellette
552 : 3^{ème} biellette

## Revendications

1. Becquet (4) pour véhicule automobile destiné à être disposé dans une région d'un bord arrière de toit au-dessus d'une lunette arrière (9), comprenant :
- plusieurs ouvertures (8) situées sur une face supérieure du becquet (4), et
- plusieurs conduits (12) aptes à relier les ouvertures (8) à une face inférieure du becquet (4),
le becquet (4) comprenant plusieurs écopes (10 ; 110 ; 210) montées dans les ouvertures (8) et mobiles par rapport au becquet (4) de manière à pouvoir, en position repliée, obturer les ouvertures (8) et à pouvoir canaliser, en position déployée, permettre l'écoulement d'air le long de la lunette arrière (9), les écopes (10; 110; 210) comprenant des moyens aptes à permettre la génération de structures tourbillonnaires, **caractérisé en ce que** les écopes (10 ; 110 ; 210) comprennent deux flancs (13) et une paroi supérieure (14) reliant les deux flancs (13), la paroi supérieure (14) formant un angle avec le toit en position déployée apte à permettre la création de vortex.

2. Becquet (4) selon la revendication 1, dans lequel un écartement entre les flancs (13) à une extrémité (218) des écopes (210) est supérieur à un écartement entre les flancs (13) à une autre extrémité (220) des écopes (210).

3. Becquet (4) selon l'une quelconque des revendications précédentes, dans lequel la paroi supérieure (14) s'étend de part et d'autre des flancs (13) dans une direction parallèle à celle de la paroi supérieure.

4. Becquet (4) selon l'une quelconque des revendications précédentes, le becquet (4) comprenant en outre une lame aérodynamique mobile (22).

5. Becquet (4) selon la revendication 4 comprenant un dispositif d'actionnement des écopes et de la lame aérodynamique comprenant un système à crémaillère comprenant une roue dentée (326) et des crémaillères (328, 330) parallèles entre elles, chacune des deux crémaillères (328, 330) collaborant respectivement avec une des écopes (10 ; 110 ; 210) et la lame aérodynamique (22).

6. Becquet (4) selon la revendication 5, dans lequel la crémaillère (328) collaborant avec la lame aérodynamique (22) comprend une extrémité incurvée (332).

7. Becquet (4) selon l'une quelconque des revendications 5 ou 6, dans lequel la crémaillère (330) collaborant avec une écope (10 ; 110 ; 210) comprend une butée (334) située à son extrémité collaborant avec l'écope (10 ; 110 ; 210).

8. Becquet (4) selon l'une quelconque des revendications 5 à 7, dans lequel les moyens d'actionnement comprennent un moyen de rappel (338) de l'écope (10 ; 110 ; 210), notamment un ressort classique ou à mémoire de forme.

9. Becquet (4) selon la revendication 4 comprenant plusieurs biellettes (548, 550, 552) aptes à permettre le déploiement et la rétractation de la lame aérodynamique (22).

10. Becquet (4) selon l'une quelconque des revendications précédentes, dans lequel les écopes (10 ; 110 ; 210) sont montées de telle sorte que, en position repliée, une face supérieure des écopes (10 ; 110 ; 210) soit affleurante avec la face supérieure du becquet (4).

11. Becquet (4) selon l'une quelconque des revendications 1 à 9, dans lequel les écopes (10 ; 110 ; 210) sont recouvertes en position repliée par un cache (438, 442) affleurant à la face supérieure du becquet ou par la lame aérodynamique (22).

12. Becquet (4) selon la revendication 11, dans lequel le cache (438, 442) ou la lame aérodynamique (22) est apte à se déployer avant ou en même temps que les écopes (10 ; 110; 210).

## Patentansprüche

1. Spoiler (4) für Kraftfahrzeug, der dazu bestimmt ist, in einem Bereich eines hinteren Dachrandes oberhalb eines Heckfensters (9) angeordnet zu werden, umfassend:
- mehrere Öffnungen (8), die sich auf einer oberen Fläche des Spoilers (4) befinden, und
- mehrere Kanäle (12), die in der Lage sind, die Öffnungen (8) mit einer unteren Fläche des Spoilers (4) zu verbinden,
wobei der Spoiler (4) mehrere Klappen (10; 110; 210) umfasst, die in den Öffnungen (8) montiert sind und relativ zu dem Spoiler (4) beweglich sind, so dass sie, in eingeklappter Stellung, die Öffnungen (8) verschließen können und, in ausgeklappter Stellung, den Luftstrom entlang des Heckfensters (9) kanalisieren gestatten können, wobei die Klappen (10; 110; 210) Mittel umfassen, die in der Lage sind, die Generierung von Wirbelstrukturen zu gestatten, **dadurch gekennzeichnet, dass** die Klappen (10; 110; 210) zwei Flanken (13) und eine obere Wand (14), welche die zwei Flanken (13) verbindet, umfassen, wobei die obere Wand (14) mit dem Dach in ausgeklappter Stellung einen Winkel bildet, der die Vortexerzeugung gestattet.

2. Spoiler (4) nach Anspruch 1 wobei ein Abstand zwischen den Flanken (13) an einem Ende (218) der Klappen (210) größer ist als ein Abstand zwischen den Flanken (13) an einem anderen Ende (220) der Klappen (210).

3. Spoiler (4) nach einem der vorhergehenden Ansprüche, wobei die obere Wand (14) sich auf beiden Seiten der Flanken (13) in einer Richtung parallel zu der Richtung der oberen Wand erstreckt.

4. Spoiler (4) nach einem der vorhergehenden Ansprüche, der Spoiler (4) ferner ein bewegliches aerodynamisches Blatt (22) umfasst.

5. Spoiler (4) nach Anspruch 4, umfassend eine Vorrichtung zum Betätigen der Klappen und des aerodynamischen Blattes (22), die ein Zahnstangensystem umfasst, das ein Zahnrad (326) und zueinander parallele Zahnstangen (328, 330) umfasst, wobei jede der zwei Zahnstangen (328, 330) mit einer der Klappen (10; 110; 210) bzw. dem aerodynamischen Blatt (22) zusammenwirkt.

6. Spoiler (4) nach Anspruch 5 wobei die Zahnstange (328), die mit dem aerodynamischen Blatt (22) zusammenwirkt, ein gekrümmtes Ende (332) umfasst.

7. Spoiler (4) nach einem der Ansprüche 5 oder 6, wobei die Zahnstange (330), die mit einer Klappe (10; 110; 210) zusammenwirkt, einen Anschlag (334) umfasst, der sich an deren Ende befindet, das mit der Klappe (10; 110; 210) zusammenwirkt.

8. Spoiler (4) nach einem der Ansprüche 5 bis 7, wobei die Betätigungsmittel ein Rückstellmittel (338) für die Klappe (10; 110; 210) umfassen, insbesondere eine herkömmliche Feder oder eine Feder mit Formgedächtnis.

9. Spoiler (4) nach Anspruch 4, umfassend mehrere Schwingarme (548, 550, 552), die in der Lage sind, das Ausklappen und das Einziehen des aerodynamischen Blattes (22) zu gestatten.

10. Spoiler (4) nach einem der vorhergehenden Ansprüche, wobei die Klappen (10; 110; 210) so montiert sind, dass, in eingeklappter Stellung, eine obere Fläche der Klappen (10; 110; 210) mit der oberen Fläche des Spoilers (4) flächenbündig ist.

11. Spoiler (4) nach einem der Ansprüche 1 bis 9, wobei die Klappen (10; 110; 210) in eingeklappter Stellung von einer Blende (438, 442), die mit der oberen Fläche des Spoilers flächenbündig ist, oder von dem aerodynamischen Blatt (22) bedeckt sind.

12. Spoiler (4) nach Anspruch 11 wobei die Blende (438, 442) oder das aerodynamische Blatt (22) in der Lage ist, vor den oder zur gleichen Zeit wie die Klappen (10; 110; 210) ausgeklappt zu werden.

## Claims

1. Spoiler (4) for an automotive vehicle intended to be mounted in a region of a roof rear edge above a rear window (9), comprising:
- several openings (8) located on a top face of the spoiler (4), and
- several conduits (12) designed to connect the openings (8) to a bottom face of the spoiler (4),
the spoiler (4) comprising several scoops (10; 110; 210) mounted in the openings (8) and movable relative to the spoiler (4) to enable the openings (8) to be closed off when in the retracted position and to enable a channelling function when in the deployed position to allow air to flow along the rear window (9), the scoops (10; 110; 210) comprising means designed to allow vortex structures to be generated, **characterised in that** the scoops (10; 110; 210) comprise two flanks (13) and a top wall (14) connecting the two flanks (13), the top wall (14) subtending an angle with the roof when in the deployed position to enable vortices to be created.

2. Spoiler (4) as claimed in claim 1, wherein a distance between the flanks (13) at one end (218) of the scoops (210) is greater than a distance between the flanks (13) at another end (220) of the scoops (210).

3. Spoiler (4) as claimed in any one of the preceding claims, wherein the top wall (14) extends on each side of the flanks (13) in a direction parallel with that of the top wall.

4. Spoiler (4) as claimed in any one of the preceding claims, the spoiler (4) further comprising a movable aerodynamic blade (22).

5. Spoiler (4) as claimed in claim 4, comprising a scoop and aerodynamic blade actuating device comprising a rack and pinion system comprising a toothed wheel (326) and mutually parallel racks (328, 330), each of the two racks (328, 330) co-operating respectively with one of the scoops (10; 110; 210) and the aerodynamic blade (22).

6. Spoiler (4) as claimed in claim 5, wherein the rack (328) co-operating with the aerodynamic blade (22) comprises a curved end (332).

7. Spoiler (4) as claimed in any one of claims 5 or 6, wherein the rack (330) co-operating with a scoop (10; 110; 210) comprises a stop (334) located at its end co-operating with the scoop (10; 110; 210).

8. Spoiler (4) as claimed in any one of claims 5 to 7, wherein the actuating means comprise a return means (338) for the scoop (10; 110; 210), in particular a conventional or shape memory spring.

9. Spoiler (4) as claimed in claim 4, comprising several rods (548, 550, 552) designed to enable the aerodynamic blade (22) to be deployed and retracted.

10. Spoiler (4) as claimed in any one of the preceding claims, wherein the scoops (10; 110; 210) are mounted so that a top face of the scoops (10; 110; 210) sits flush with the top face of the spoiler (4) when in the retracted position.

11. Spoiler (4) as claimed in any one of claims 1 to 9, wherein in the retracted position, the scoops (10; 110; 210) are covered by a cover (438, 442) flush with the top face of the spoiler or by the aerodynamic blade (22).

12. Spoiler (4) as claimed in claim 11, wherein the cover (438, 442) or aerodynamic blade (22) is designed to be deployed before or at the same time as the scoops (10; 110; 210).
